# EUROPÄISCHE PATENTANMELDUNG

(11) **EP 0 827 855 A2**
(43) Veröffentlichungstag der Anmeldung: **11.03.1998**
(21) Anmeldenummer: 97115061.0
(22) Anmeldetag: 30.08.1997
(51) Int. Cl.: B60H 1/32, B60H 1/00

(54) **Klimagerät für Fahrzeugkabinen**

(30) Priorität: 10.09.1996 DE 19636679
(71) Anmelder: Gaus, Ernst, 76275 Ettlingen (DE)
(72) Erfinder: Gaus, Ernst, 76275 Ettlingen (DE)
(74) Vertreter: Geitz, Heinrich, Dr.-Ing.

(57) **Zusammenfassung**

Ein zum Klimatisieren von Fahrzeugkabinen, insbesondere der Fahrerkabinen von Lastkraftwagen, bestimmtes Klimagerät ist als kompaktes Dachaufsatzgerät (10,70) ausgebildet, in dem neben je einem Verflüssiger- und Verdampferteil (14,15,71) ein hermetisch gekapseltes Kälteaggregat (12) aufgenommen ist. Das Kälteaggregat umfaßt einen Kältekompressor und als Antriebsmaschine für den Kältekompressor einen Drehstrom-Asynchronmotor.
Der Drehstrom-Asynchronmotor ist über eine Steuerelektronik (13), die einen an eine Gleichstromquelle, etwa eine Fahrzeugbatterie, anlegbaren Wechselrichter zum Erzeugen von Drehstrom und einen Frequenzwandler zum Steuern der Frequenz des erzeugten Drehstroms umfaßt, aus der Gleichstromquelle versorgbar.

## Beschreibung

Die Erfindung bezieht sich auf ein Klimagerät zum Klimatisieren von Fahrzeugkabinen, das in einem Dachausschnitt der jeweiligen Fahrzeugkabine aufnehmbar ist. Insbesondere bezieht sich die Erfindung auf ein Klimagerät zum Klimatisieren der Fahrerkabinen von Lastkraftwagen.

Klimaanlagen der vorgenannten Art und Zweckbestimmung sind allgemein bekannt. Es handelt sich dabei um Geräte mit in einem flachen Dachaufsatz aufgenommenem Verflüssiger und Verdampfer, die über geeignete Leitungen für das Kältemittel mit einem im Motorraum eines mit einem derartigen Gerät ausgerüsteten Lastkraftwagens angeordneten Kältekompressor verbunden sind, der über einen Keilriemen von der Brennkraftmaschine des Fahrzeugs angetrieben wird.

Unbefriedigend bei diesen vorbekannten Klimageräten ist der vom Fahrzeugmotor abgeleitete Antrieb des Kältekompressors, weil bei einem derartigen Antrieb des Kältekompressors gerade dann, wenn ein hoher Kältebedarf besteht, nur wenig Kälteleistung zur Verfügung steht. Beispielsweise ist dies im Stop- and Go-Betrieb der Fall, bei dem während der Stillstandsphasen der Kraftfahrzeug-Motor mit Leerlaufdrehzahl umläuft und die Kälteleistung des Kältekompressors allenfalls bei 15 % seiner maximalen Kälteleistung liegt.

Demgegenüber besteht die der Erfindung zugrundeliegende Aufgabe in der Schaffung eines Klimagerätes der vorgenannten Art und Zweckbestimmung, das unabhängig vom Betrieb einer Fahrzeug-Antriebsmaschine hinsichtlich seiner Kälteleistung an den jeweiligen Kältebedarf anpaßbar ist.

Gelöst ist diese Aufgabe durch die Ausbildung des Klimagerätes als kompaktes Dachaufsatzgerät, in dem neben je einem Verflüssiger- und Verdampferteil ein hermetisch gekapseltes Kälteaggregat mit einem Kältekompressor und einem Drehstrom-Asynchronmotor als Antriebsmaschine für den Kältekompressor aufgenommen ist, wobei der Drehstrom-Asynchronmotor über eine Steuerelektronik mit einem an eine Gleichstromquelle anlegbaren Wechselrichter und mit einem Frequenzwandler zum Steuern der Frequenz des erzeugten Drehstroms aus der Gleichstromquelle versorgbar ist.

Im Gegensatz zu vorbekannten Klimageräten dieser Art und Zweckbestimmung ist bei der Erfindung ein Kälteaggregat mit dem Kältekompressor und einem Drehstrom-Asynchronmotor in räumlicher Nähe zu dem Verflüssiger- und Verdampferteil im Dachaufsatzgerät selbst angeordnet. Der für den Betrieb des Drehstrom-Asynchronmotors erforderliche Drehstrom wird mittels des an eine Gleichstromquelle, beispielsweise eine Fahrzeugbatterie, anlegbaren Wechselrichters aus Gleichstrom erzeugt und ein Frequenzwandler ermöglicht eine Absenkung der Drehstromfrequenz etwa umgekehrt proportional zur Motorlast, was bei im wesentlichen konstant bleibender Statorspannung zu einer Erhöhung des Kurzschlußstroms und damit zu einer Erhöhung des Motor-Drehmomentes führt.

Kennzeichnend für das Klimagerät nach der Erfindung ist mithin, daß völlig unabhängig vom Betrieb des Fahrzeugmotors das Klimagerät entsprechend der jeweils geforderten Kälteleistung betreibbar ist, so daß auch bei Fahrzeugstillstand ausreichende Kälteleistung zur Verfügung steht. Darüber hinaus ergibt sich angesichts der Integration des Kälteaggregats in das Dachaufsatzgerät selbst ein kompakter Geräteaufbau bei Wegfall der für den Stand der Technik typischen langen Zu- und Rückführleitungen für das Kältemittel.

Im Interesse eines kompakten Geräteaufbaus sieht eine Weiterbildung der Erfindung vor, daß der Verflüssigerteil, der Verdampferteil und das Kälteaggregat mit der Steuerelektronik auf einer das Klimagerät unterseitig abschließenden Platine aufgenommen sind.

Gemäß einer anderen Weiterbildung weist das erfindungsgemäße Klimagerät eine Abdeckhaube auf, die mit Ein- und Auslaßöffnungen zum Zu- und Abführen der Kühlluft für den Verflüssigerteil versehen ist sowie den Verflüssiger- und Verdampferteil, das Kälteaggregat und die Steuerelektronik übergreift.

Grundsätzlich können bei dem erfindungsgemäßen Klimagerät dessen Aggregate in beliebiger Weise einander zugeordnet sein. Es kommt allein auf eine möglichst kompakte Bauart an. Eine abermals zweckmäßige Weiterbildung sieht indessen vor, daß bei bestimmungsgemäßem Einbau des Gerätes in einen Dachausschnitt einer Fahrzeugkabine der Verflüssigerteil und der Verdampferteil in Fahrzeug-Fahrtrichtung beabstandet voneinander angeordnet sind und daß zwischen letzteren das Kälteaggregat aufgenommen ist.

Eine derartige Zuordnung der Aggregate des Klimagerätes zueinander ermöglicht eine präzise Trennung des Verflüssigerteils vom Verdampferteil und erleichtert die Führung der Kühlluft durch den Verflüssigerteil sowie der zu kühlenden Kabinenluft durch den Verdampferteil.

Zweckmäßigerweise ist auch die Steuerelektronik mit dem Wechselrichter und Frequenzwandler in dem Zwischenraum zwischen dem Verflüssiger- und Verdampferteil angeordnet, und zwar quer zur Fahrzeug-Fahrtrichtung beabstandet vom Kälteaggregat. Dabei kann der Steuerelektronik ein Gebläse zum zwangsweisen Zuführen von Kühlluft zugeordnet sein oder aber die Steuerelektronik kann auch im Zuströmweg der Kühlluft für den Verflüssigerteil angeordnet sein, in welchem Falle es eines zusätzlichen Gebläses zum Zuführen von Kühlluft zu der Steuerelektronik nicht bedarf.

Ebenfalls in Weiterbildung der Erfindung ist wenigstens je ein Gebläse zur Zwangsbelüftung des Verflüssigerteils und des Verdampferteils vorgesehen. Das Gebläse zur Zwangsbelüftung des Verflüssigerteils kann dabei unter diesem oder alternativ dazu - in Fahrtrichtung eines mit dem Klimagerät ausgerüsteten Fahrzeugs gesehen - hinter dem Verflüssigerteil angeordnet sein.

Hingegen hat sich die Anordnung des Gebläses zur Zwangsbelüftung des Verdichterteils über diesem als zweckmäßig erwiesen, wobei dieses Gebläse über zumindest eine Einlaßöffnung Kabinenluft ansaugt und diese nach dem Durchströmen des Verdampferteils über wenigstens eine Luftauslaßöffnung in die Kabine zurückführt.

Für die Zwangsbelüftung des Verflüssiger- und Verdampferteils können Gebläse beliebiger Art eingesetzt werden. Als besonders zweckmäßig haben sich jedoch Radialgebläse mit ansaugseitig axialer Luftzufuhr erwiesen.

Eine Verbesserung des Wärmeaustauschs im Verflüssigerteil mit der durch diesen hindurchgeführten Kühlluft und im Verdampferteil mit der diesen durchströmenden Kabinenluft ist erreichbar, wenn dem Verflüssigerteil und dem Verdampferteil jeweils zwei quer zur Fahrtrichtung eines mit dem Klimagerät ausgerüsteten Fahrzeugs voneinander beabstandete Gebläse zugeordnet sind.

Gemäß einer abermaligen Weiterbildung dar Erfindung ist unter dem Verdampferteil eine Auffangwanne für vom Verdampferteil abtropfendes Kondensat vorgesehen, die wenigstens eine geräteaußenseitig ausmündende Auslaßöffnung für das Kondensat aufweist. Diese Auffangwanne ist, ebenfalls gemäß einer Weiterbildung, von wenigstens einer Lufteinlaßöffnung zum Ansaugen von Kabinenluft durchbrochen.

Gemäß einer anderen Weiterbildung ist die Lufteinlaßöffnung zum Ansaugen von Kabinenluft mit einer oberseitigen Abdeckung versehen, die seitlich über die Ränder der Lufteinlaßöffnung vorsteht und zum Ableiten von abtropfendem Kondensat in die Auffangwanne dient.

Obgleich zum Einleiten der nach dem Durchströmen des Verdampferteils gekühlten Kabinenluft in die Kabine eines mit einem erfindungsgemäßen Klimagerät ausgerüsteten Fahrzeugs vielfältige Luftführungen vorstellbar sind, hat sich ein abströmseitig an das dem Verdampferteil zugeordnete Gebläse anschließender Luftleitkanal mit wenigstens einem in der Fahrzeug-Kabine ausmündendem Luftauslaß als vorteilhaft erwiesen. Zweckmäßigerweise mündet der Luftauslaß des Luftleitkanals in Fahrzeug-Fahrtrichtung vor der Lufteinlaßöffnung zum Ansaugen von Kabinenluft aus. Dadurch ist eine wirksame Trennung der über den Verdampferteil abzusaugenden Kabinenluft und der im gekühlten Zustand in die Kabine zurückzuführenden Luft gewährleistet.

Anhand der beigefügten Zeichnungen sollen nachstehend zwei Ausführungsbeispiele der Erfindung näher erläutert werden. In schematischen Ansichten zeigen:
- Fig. 1: eine Draufsicht auf eine erste Ausführungsform eines Dachaufsatz-Klimagerätes mit je einem Verflüssiger- und Verdampferteil sowie einem Kälteaggregat und einer Steuerelektronik, wobei von einer oberseitigen Abdeckung des Gerätes nur der Umriß im Schnitt dargestellt ist,
- Fig. 2: einen in Fahrtrichtung eines mit einem derartigen Klimagerät ausgerüsteten Fahrzeugs verlaufenden Längsschnitt durch das Gerät gemäß Schnittlinie II-II in Fig. 1,
- Fig. 3: in einem der Schnittlinie III-III entsprechenden Querschnitt durch das Klimagerät dessen Verdampferteil,
- Fig. 4: in einem der Schnittlinie IV-IV in Fig. 1 entsprechenden Querschnitt durch das Klimagerät die Anordnung des Kälteaggregats und der Steuerelektronik,
- Fig. 5: in einem der Schnittlinie V-V in Fig. 1 entsprechenden Querschnitt durch das Klimagerät dessen Verflüssigerteil,
- Fig. 6: eine Draufsicht wie in Fig. 1 auf eine zweite Ausführungsform eines Klimagerätes und
- Fig. 7: einen Längsschnitt gemäß der Schnittlinie VII-VII in Fig. 6 durch die zweite Ausführungsform.

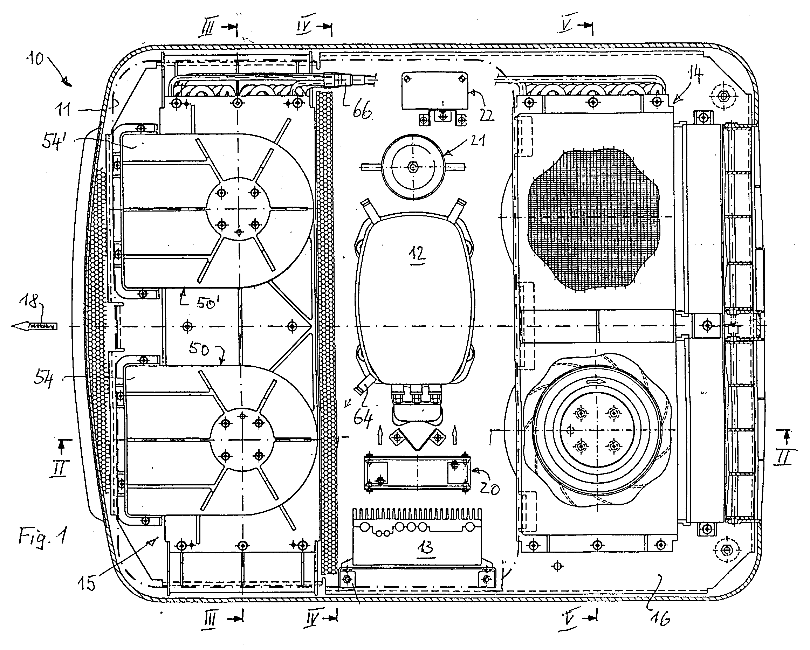

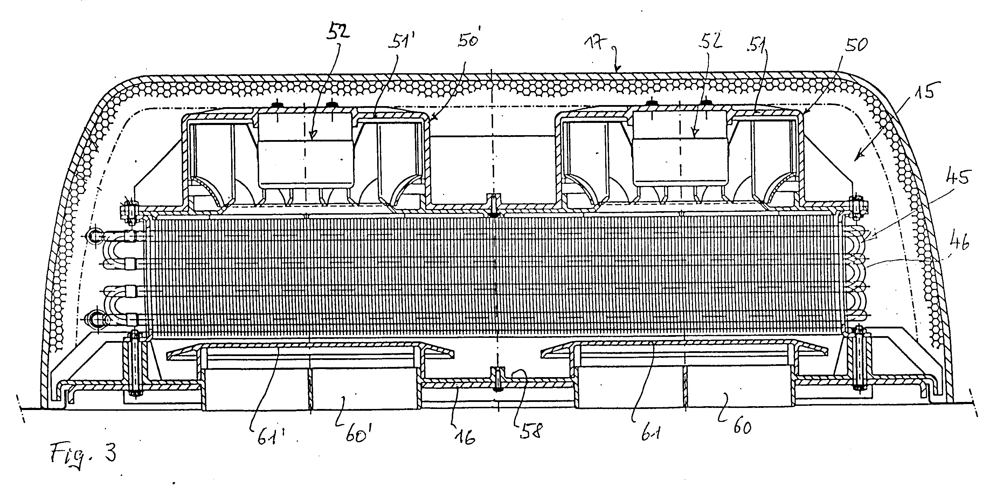

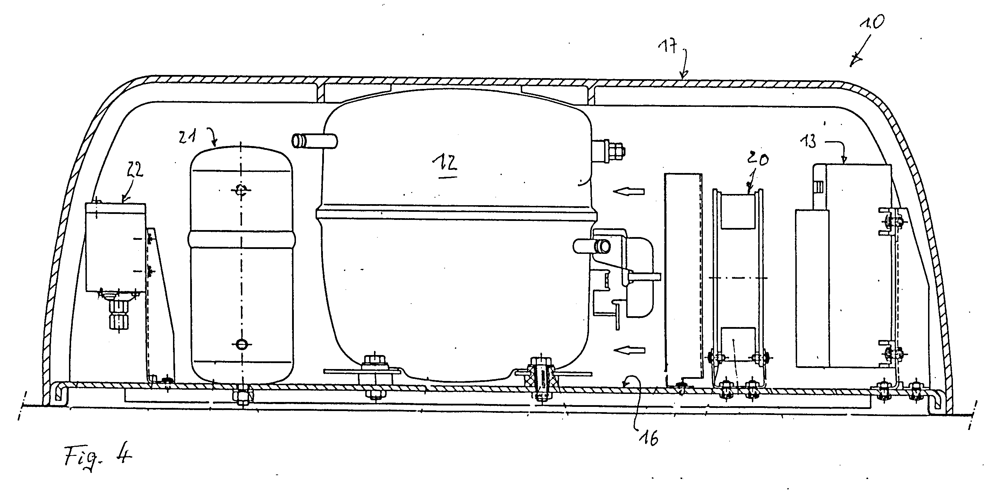

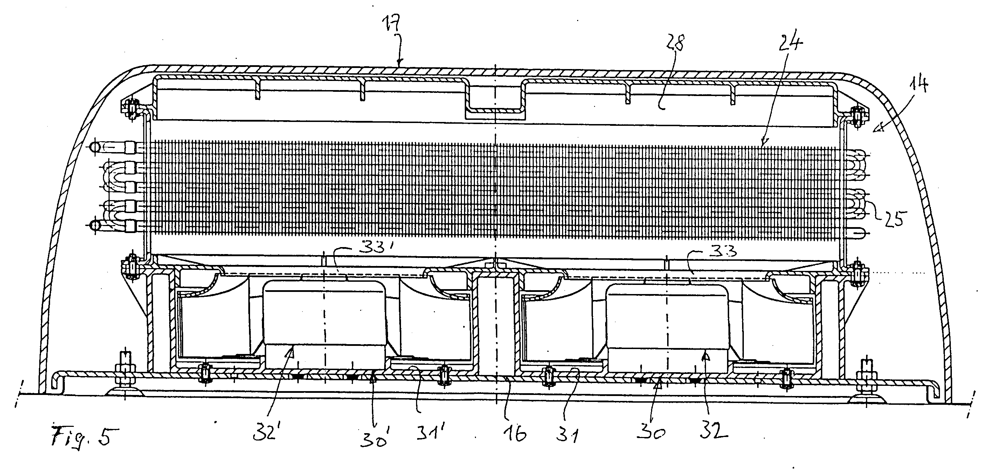

Das in den Fig. 1 bis 5 veranschaulichte Klimagerät 10, das zur Aufnahme in einem in Fig. 1 durch eine strichpunktierte Linie 11 angedeuteten Ausschnitt im Dach einer im übrigen nicht dargestellten LKW-Fahrerkabine bestimmt ist, umfaßt als hauptsächliche Gerätebaugruppen ein hermetisch gekapseltes Kälteaggregat 12, eine Steuerelektronik 13 und je einen Verflüssigerteil 14 und einen Verdampferteil 15. Unterseitig ist das Klimagerät 10 von einer Platine 16 abgeschlossen, auf der die genannten Gerätebaugruppen aufgenommen sind. Schließlich umfaßt das Gerät eine die Baugruppen seitlich und oberseitig umschließende Abdeckhaube 17, die bis an die Platine 16 heranreicht.

Der Verflüssigerteil 14 und der Verdampferteil 15 sind, in der in Fig. 1 durch den Pfeil 18 angedeuteten Fahrtrichtung eines mit dem Klimagerät 10 ausgerüsteten Lastkraftwagens gesehen, beabstandet voneinander angeordnet, und zwar der Verdampferteil 15 in Fahrtrichtung vorn. In einem Zwischenraum zwischen dem Verflüssigerteil 14 und dem Verdampferteil 15 sind das Kälteaggregat 12 und davon quer zur Fahrtrichtung beabstandet die Steuerelektronik 13 angeordnet. Zwischen der Steuerelektronik 13 und dem Kälteaggregat 12 befindet sich ein ebenfalls auf der Platine 16 aufgenommenes Axialgebläse 20 zum Zuführen von Kühlluft zur Steuerelektronik 13. Auf der von dem Axialgebläse 20 abgewandten Seite des Kälteaggregats 12 sind im Zwischenraum zwischen dem Verflüssigerteil 14 und dem Verdampferteil 15 ferner ein Kältemittelsammler 21 und ein Pressostat 22 angeordnet und ebenfalls auf der Platine 16 aufgenommen.

Der Verflüssigerteil 14 umfaßt einen langgestreckten Wärmetauscher 24 mit einer durchlaufenden Rohrwendel 25. Der Wärmetauscher 24 ist quer zur Fahrtrichtung eingebaut und zwischen je einer vor- und rückseitigen Abdeckung 26, 27 aufgenommen. An die vorderseitige Abdeckung 26 schließt sich oberseitig ein Luftleitkanal 28 mit einer rückseitigen Einlaßöffnung 29 an, der quer zur Fahrtrichtung im wesentlichen über die gesamte Längenerstreckung des Verflüssigerteils 14 reicht. Der Verflüssigerteil 14 umfaßt ferner zwei unter dem Wärmetauscher 24 in Fahrtrichtung beabstandet voneinander angeordnete Radialgebläse 30, 30' mit jeweils innerhalb eines Gehäuses 31, 31' aufgenommenen und um vertikale Achsen umlaufenden Rotoren 32, 32'. Die Axialgebläse 30, 30' haben jeweils einen zum Wärmetauscher hin gerichteten axialen Lufteinlaß 33, 33' und einen nach rückwärts, also nach der vom Kälteaggregat 12 abgewandten Seite radial gerichteten Luftauslaß.

Die Rückwand der Abdeckhaube 17 ist von je einer langgestreckten Einlaßöffnung 35 für dem Wärmetauscher 24 zuzuführende Kühlluft und einer Auslaßöffnung 36 für die vom Wärmetauscher 24 abströmende Kühlluft durchbrochen. Abdeckhaubeninnenseitig schließen sich an die Kühllufteinlaßöffnung 35 und die Kühlluftauslaßöffnung 36 Luftführungsstutzen 37, 38 an, in denen jeweils eine zwischen einer die betreffende Öffnung absperrenden und freigebenden Lage um eine horizontale Anlenkachse verschwenkbare Luftleitklappe 39, 40 aufgenommen sind. Die Luftleitklappen 39, 40 sind über einen nur angedeuteten Kettentrieb 41 miteinander wirkverbunden und mittels eines in eine Trumlage des Kettentriebs eingreifenden Ritzels 42 synchron verstellbar.

Der Verdampferteil 15 umfaßt ebenfalls einen langgestreckten Wärmetauscher 45 mit einer durchlaufenden Rohrwendel 46, der quer zur Fahrtrichtung eingebaut und ebenfalls zwischen je einer vorder- und rückseitigen Abdeckung 47, 48 aufgenommen ist. Über dem Wärmetauscher 45 sind in Fahrtrichtung beabstandet voneinander zwei Radialgebläse 50, 50' mit jeweils innerhalb eines Gehäuses 51, 51' aufgenommenen und um vertikale Achsen umlaufenden Rotoren 52, 52'. Die Lufteinlaßöffnungen 53, 53' der Gebläse 50, 50' sind axial gerichtet und weisen nach unten, also zu dem Wärmetauscher 45 hin. Die Gebläsegehäuse 51, 51' schließen sich an die vorder- und rückseitigen Abdeckungen 47, 48 des Wärmetauschers 45 an und haben in Fahrtrichtung nach vorn weisende radiale Luftauslaßöffnungen, die jeweils in einen Krümmer 54, 54' übergehen und an jeden dieser Krümmer schließt sich ein abwärts gerichteter Luftleitkanal 55, 55' mit einer unterseitigen, im eingebauten Zustand des Gerätes in der Kabine ausmündenden Luftauslaßöffnung 56, 56' an. Unter dem Wärmetauscher 45 befindet sich eine Auffangwanne 58 für vom Wärmetauscher 45 im Betrieb abtropfendes Kondensat und diese Auffangwanne 58 und die Platine 16 sind jeweils unter den beiden Gebläsen 50, 50' des Verdampfers 14 von Lufteintrittsöffnungen 60, 60' zum Ansaugen von Kabinenluft durchbrochen. Jeder der Lufteinlaßöffnungen 60, 60' ist eine oberseitige Abdeckung 61, 61' zugeordnet, die über die Ränder der jeweiligen Lufteintrittsöffnung 60, 60' reicht und vom Wärmetauscher 45 abtropfendes Kondensat in die Auffangwanne 58 ableitet.

Das Kälteaggregat 12 ist hermetisch gekapselt und besitzt einen Kältekompressor sowie als Antriebsmaschine für diesen einen Drehstrom-Asynchronmotor. Die Steuerelektronik 13 umfaßt einen an eine Gleichspannungsquelle, etwa eine Fahrzeugbatterie, anlegbaren Drei-Phasen-Wechselrichter zum Erzeugen von Drehstrom zur Versorgung des Drehstrom-Asynchronmotors des Kälteaggregats 12. Ferner umfaßt die Steuerelektronik 13 einen Frequenzwandler zum Steuern der Frequenz des mittels des an der Gleichspannungsquelle anliegenden Wechselrichters erzeugten Drehstroms.

Bei der in den Fig. 1 bis 5 veranschaulichten Ausführungsform ist zwischen dem Kälteaggregat 12 und der seitlich davon angeordneten Steuerelektronik 13 ein Axialgebläse 20 angeordnet, das die Steuerelektronik 13 umströmende Kühlluft ansaugt, wie dies die in der Zeichnung dargestellten Strömungspfeile andeuten.

Bei bestimmungsgemäßer Verwendung des Klimagerätes wird das im Kompressor des Kälteaggregates 12 verdichtete Kältemittel über einen aus dem Kälteaggregat 12 herausgeführten Druckstutzen 64 und eine nicht weiter dargestellte Leitung den obenliegenden Rohrabschnitten der Rohrwendel 25 des Verflüssigerteils 14 zugeführt. Ein unterer Rohrabschnitt der Rohrwendel 25 des Verflüssigerteils 14 steht über den neben dem Kälteaggregat 12 angeordneten Kältemittelsammler 21 und ein Entspannungsventil 66 mit der Rohrwendel 46 des im Verdampferteil 15 aufgenommenen Wärmetauschers 45 in Strömungsverbindung. Am anderen Ende der Rohrwendel 46 des Verdampferteils 15 ist eine Rücklaufleitung angeschlossen, die das Kältemittel zum Kälteaggregat 12 und damit zu dessen Kältekompressor zurückleitet.

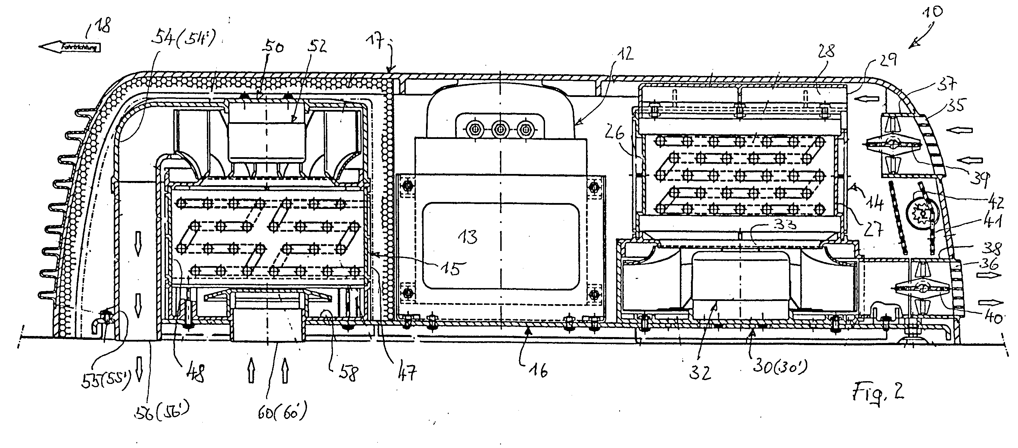

Das im Betrieb des Klimagerätes 10 vom Kältekompressor des Kälteaggregates 12 verdichtete Kältemittel durchströmt den Wärmetauscher 24 des Verflüssigerteils 14, wobei das Kältemittel die im innewohnende Wärme an Kühlluft abgibt, die mittels der unter dem Wärmetauscher 24 des Verflüssigerteils 14 angeordneten Gebläse 30, 30' durch den Wärmetauscher 24 hindurchgesaugt und dann-nach außen abgeführt wird. Insbesondere in Fig. 2 ist die Strömung der Kühlluft durch die angedeuteten Strömungspfeile veranschaulicht.

Nach dem Durchströmen des Wärmetauschers 24 des Verflüssigerteils 14 gelangt das heruntergekühlte Kältemittel über den Kältemittelsammler 21 und das Entspannungsventil 66, an dem eine Druckabsenkung erfolgt und das Kältemittel in eine gasförmige Phase übergeht, in den Wärmetauscher 45 des Verdampferteils 15 und durchströmt dessen Rohrwendel 46, um dann über zum Kältekompresor des Kälteaggregats 12 zurückgeleitet zu werden. Der Übergang des Kältemittels von seiner flüssigen Phase in die dampfförmige Phase erfordert die Zufuhr von Verdampfungswärme. Diese Verdampfungswärme entnimmt das Kältemittel beim Durchströmen der Rohrwendel 46 des im Verdampferteil 15 aufgenommenen Wärmetauscher 45 der mittels den zugeordneten Gebläsen 50, 50' durch diesen Wärmetauscher 45 hindurchgeführten Kabinenluft, die nach dem Durchströmen des Wärmetauschers 45, 45' über die beiden sich von den Gebläsen 50, 50' forterstreckenden und kabinenseitig ausmündenden Luftleitkanäle 55, 55' im gekühlten Zustand wieder in die Kabine zurückgeführt wird.

Der Pressostat 22 ist über eine nicht dargestellte Leitung mit dem Kältemittelsammler 21 derart verbunden, daß der am Sammler 21 herrschende Druck am Pressostat 22 anliegt. Bei dem Pressostat 22 handelt es sich um einen auf der Hochdruckseite eingebauten Sicherheitsschalter, an dem die Arbeitsdrücke bzw. Abschaltpunkte einstellbar sind. Wenn der am Pressostat anstehende Druck den eingestellten Druck übersteigt, schaltet der Pressostat den Kompressorantrieb ab. Sobald der überhöhte Druck auf oder unter den eingestellten Druck abgebaut ist, schließt der Pressostat den Versorgungskreis des Antriebsmotors des Kompressors und dieser läuft wieder an.

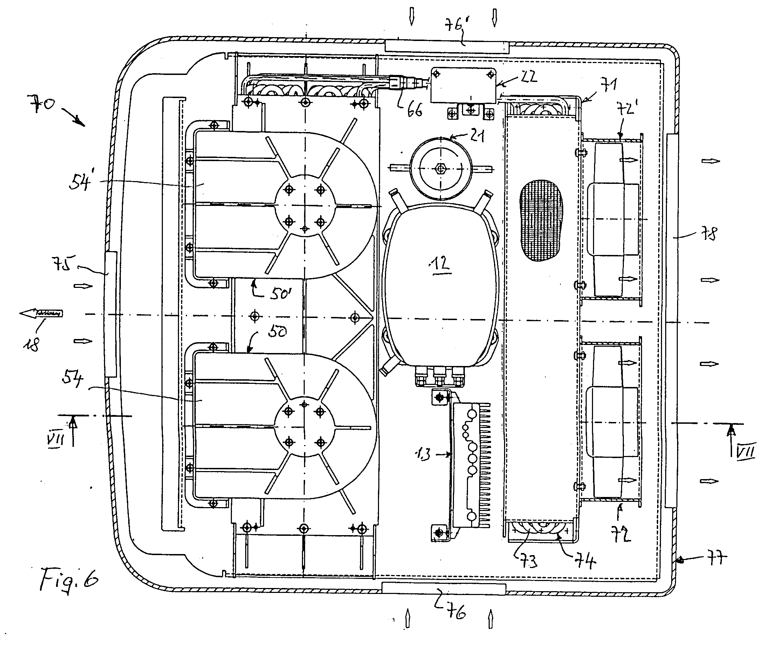

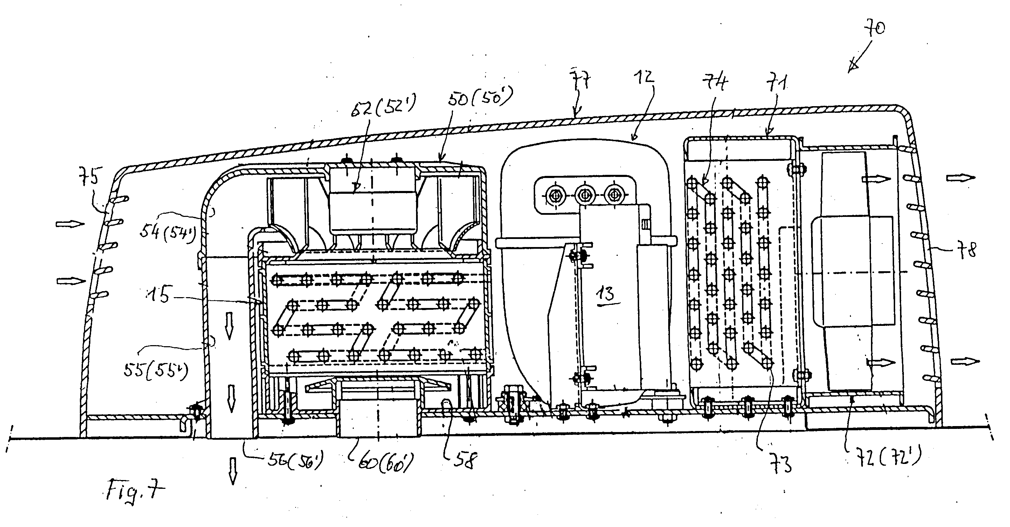

Das in den Fig. 6 und 7 veranschaulichte Klimagerät 70 ist in grundsätzlich gleicher Weise wie die in den Fig. 1 bis 5 gezeigte Ausführungsform aufgebaut. Insoweit sind in den Fig. 6 und 7 für gleiche Teile wie in den Fig. 1 bis 5 auch die gleichen Bezugszeichen verwendet.

Wie bei der ersten Ausführungsform sind als hauptsächliche Baugruppen ein hermetisch gekapseltes Kälteaggregat 12, eine Steuerelektronik 13, ein Verflüssigerteil 71 und ein Verdampferteil 15 auf einer Platine 16 aufgenommen. Das Kälteaggregat 12 befindet sich zwischen dem - in Fahrtrichtung eines mit einem derartigen Klimagerät 71 ausgerüsteten Fahrzeugs gesehen - vorn angeordneten Verdampferteil 15 und dem in Fahrtrichtung hinten liegenden Verflüssigerteil 71. Im Unterschied zu der ersten Ausführungsform ist der Verflüssigerteil 71 mit - in Fahrtrichtung gesehen - hinter diesem angeordneten Gebläsen 72, 72' zum Ansaugen von Kühlluft ausgerüstet. Ein von einer durchlaufenden Rohrwendel 73 gebildeter Wärmetauscher 74 des Verflüssigerteils 71 ist horizontal durchströmbar und die quer zur Fahrtrichtung beabstandet voneinander angeordneten Gebläse 72, 72' sind als Axialgebläse ausgebildet.

Im Betrieb der Kühlluft-Gebläse 72, 72' wird die Kühlluft für den Wärmetauscher 74 des Verflüssigerteils 71 über Lufteintrittsöffnungen 75 und 76, 76' angesaugt, welche eine die Gerätebaugruppen umschließende Haube 77 vorderseitig und an beiden Seiten durchbrechen sowie mit gitterartigen Lamellen ausgerüstet sind. In den Fig. 6 und 7 deuten Strömungspfeile den Eintritt der von den Kühlluft-Gebläsen 72, 72' des Verflüssigerteils 71 angesaugten Kühlluft in die genannten Lufteinlaßöffnungen 75 und 76, 76' an. Abgeführt wird die Kühlluft über eine die Abdeckhaube 77 rückseitig durchbrechende Auslaßöffnung 78, die ebenfalls mit der Strömungsführung dienenden Lamellen ausgerüstet ist.

Angesichts der Kühlluftzufuhr zum Wärmetauscher 74 des Verflüssigerteils 71 durchströmt die von den Kühlluft-Gebläsen 72, 72' durch die vorderseitige Lufteinlaßöffnung 75 angesaugte Kühlluft einerseits das Klimagerät 70 in Längsrichtung zwischen den beiden Gebläsen 50, 50' des Verdampferteils 15, die oberseitig von dessen Wärmetauscher 45 angeordnet sind, und andererseits die über die seitlichen Lufteinlaßöffnungen 76, 76' zugeführte Kühlluft zunächst quer zur Fahrtrichtung, um dann in Fahrtrichtung durch den Wärmetauscher 74 des Verflüssigerteils 71 hindurchgeführt zu werden.

Die ebenfalls im Zwischenraum zwischen dem Verdampferteil 15 und dem Verflüssigerteil 71 aufgenommene Elektronik 13 ist beabstandet vom Kälteaggregat 12 angeordnet und liegt in dem von den Kühlluft-Gebläsen 72, 72' angesaugten Kühlluftstrom. Demgemäß bedurfte es bei der zweiten Ausführungsform keine speziellen Kühlgebläses zum Zuführen von Kühlluft zu der Steuerelektronik 13.

Angesichts der Ausrüstung des Verflüssigerteils 71 mit einem in Fahrtrichtung von Kühlluft durchströmbaren Wärmetauscher 74 weist die zweite Ausführungsform eine - in Fahrtrichtung gesehen - geringere Baulänge auf als das oben in Verbindung mit den Fig. 1 bis 5 beschriebene Klimagerät 10. Diese Bauform hat sich bei solchen Fahrzeugen als vorteilhaft erwiesen, die mit einem rückseitig von einer Dachluke aufsteigenden Spoiler ausgerüstet sind.

## Patentansprüche

1. Klimagerät zum Klimatisieren von Fahrzeugkabinen, insbesondere der Fahrerkabinen von Lastkraftwagen, das in einem Ausschnitt im Kabinendach aufnehmbar ist,
gekennzeichnet durch
die Ausbildung als kompaktes Dachaufsatzgerät (10, 70), in dem neben je einem Verflüssiger- und Verdampferteil (14, 15, 71) ein hermetisch gekapseltes Kälteaggregat (12),
das einen Kältekompressor und für diesen als Antriebsmaschine einen Drehstrom-Asynchronmotor besitzt, aufgenommen ist, wobei der Drehstrom-Asynchronmotor über eine Steuerelektronik (13) mit einem an eine Gleichstromquelle anlegbaren Wechselrichter zum Erzeugen von Drehstrom und mit einem Frequenzwandler zum Steuern der Frequenz des erzeugten Drehstroms aus der Gleichstromquelle versorgbar ist.

2. Klimagerät nach Anspruch 1, dadurch gekennzeichnet, daß der Verflüssigerteil (14, 71), der Verdampferteil (15) und das Kälteaggregat (12) mit der Steuerelektronik (13) auf einer das Klimagerät (10, 70) unterseitig abschließenden Platine (16) aufgenommen sind.

3. Klimagerät nach Anspruch 1 oder 2, dadurch gekennzeichnet, daß eine Abdeckhaube (17, 77), die mit Ein- und Auslaßöffnungen (35, 36; 75, 76, 76', 78) zum Zu- und Abführen der Kühlluft für den Verflüssigerteil (14, 71) versehen ist, den Verflüssiger- und Verdampferteil (14, 15, 71) sowie das Kälteaggregat (12) und die Steuerelektronik (13) übergreift.

4. Klimagerät nach einem der Ansprüche 1 bis 3, dadurch gekennzeichnet, daß bei bestimmungsgemäßem Einbau des Gerätes (10, 70) in einen Dachausschnitt (11) einer Fahrzeugkabine der Verdampferteil (15) und der Verflüssigerteil (14, 71) in Fahrzeug-Fahrtrichtung beabstandet voneinander angeordnet sind und daß zwischen diesen das Kälteaggregat (12) aufgenommen ist.

5. Klimagerät nach Anspruch 4, dadurch gekennzeichnet, daß die Steuerelektronik (13) mit dem Wechselrichter und Frequenzwandler quer zur Fahrzeug-Fahrtrichtung beabstandet vom Kälteaggregat (12) zwischen dem Verflüssiger- und Verdampferteil (14, 15, 71) angeordnet ist.

6. Klimagerät nach Anspruch 5, dadurch gekennzeichnet, daß der Steuerelektronik (13) ein Gebläse (20) zum zwangsweisen Zuführen von Kühlluft zugeordnet ist.

7. Klimagerät nach Anspruch 5, dadurch gekennzeichnet, daß die Steuerelektronik (13) im Zuströmweg der Kühlluft für den Verflüssigerteil (71) angeordnet ist.

8. Klimagerät nach einem der Ansprüche 1 bis 7, dadurch gekennzeichnet, daß dem Verflüssigerteil (14, 71) und dem Verdampferteil (15) wenigstens je ein deren Zwangsbelüftung vermittelndes Gebläse (30, 30'; 50, 50'; 72, 72') zugeordnet ist.

9. Klimagerät nach Anspruch 8, dadurch gekennzeichnet, daß das Gebläse (30, 30') zur Zwangsbelüftung des Verflüssigerteils (14) unter diesem angeordnet ist.

10. Klimagerät nach Anspruch 8, dadurch gekennzeichnet, daß das Gebläse (72, 72') zur Zwangsbelüftung des Verflüssigerteils (71) - in Fahrtrichtung eines mit dem Klimagerät ausgerüsteten Fahrzeugs gesehen - hinter dem Verflüssigerteil (71) angeordnet ist.

11. Klimagerät nach einem der Ansprüche 8 bis 10, dadurch gekennzeichnet, daß das Gebläse (50, 50') zur Zwangsbelüftung des Verdampferteils (15) über diesem angeordnet ist und über zumindest eine Einlaßöffnung (60, 60') Kabinenluft ansaugt und diese nach dem Durchströmen des Verdampferteils (15) über wenigstens eine Luftauslaßöffnung (56, 56') in die Kabine zurückführt.

12. Klimagerät nach einem der Ansprüche 8 bis 11, dadurch gekennzeichnet, daß es sich bei den Gebläsen (30, 30', 50, 50') zur Zwangsbelüftung des Verflüssiger- und Verdampferteils (14, 15) um Radialgebläse mit ansaugseitig axialer Luftzufuhr handelt.

13. Klimagerät nach Anspruch 10, dadurch gekennzeichnet, daß es sich bei dem Gebläse (72, 72') zur Zwangsbelüftung des Verflüssigerteils (71) um ein Axialgebläse handelt.

14. Klimagerät nach einem der Ansprüche 8 bis 13, dadurch gekennzeichnet, daß dem Verflüssigerteil (14) und dem Verdampferteil (15) jeweils zwei quer zur Fahrzeug-Fahrtrichtung voneinander beabstandete Gebläse (30, 30'; 50, 50') zugeordnet sind.

15. Klimagerät nach einem der Ansprüche 1 bis 14, dadurch gekennzeichnet, daß unter dem Verdampferteil (15) eine von wenigstens einer Lufteinlaßöffnung (60, 60') zum Ansaugen von Kabinenluft durchbrochene Auffangwanne (38) für vom Verdampferteil (15) abtropfendes Kondensat mit wenigstens einer geräteaußenseitig ausmündenden Auslaßöffnung für das Kondensat angeordnet ist.

16. Klimagerät nach Anspruch 15, dadurch gekennzeichnet, daß die Lufteinlaßöffnung (60, 60') zum Ansaugen von Luft eine oberseitige und seitlich über die Ränder der Lufteinlaßöffnung (60, 60') vorstehende Abdeckung (61, 61') zum Ableiten von abtropfendem Kondensat in die Auffangwanne (58) aufweist.

17. Klimagerät nach Anspruch 11, dadurch gekennzeichnet, daß sich abströmseitig an das dem Verdampferteil (15) zugeordnete Gebläse (50, 50') ein Luftleitkanal (55, 55') mit wenigstens einer in der Fahrzeug-Kabine ausmündenden Luftauslaß (56, 56') anschließt.

18. Klimagerät nach Anspruch 17, dadurch gekennzeichnet, daß der Luftauslaß (56, 56') des Luftleitkanals (55, 55') in Fahrzeug-Fahrtrichtung vor der Lufteinlaßöffnung (60, 60') zum Ansaugen von Kabinenluft ausmündet.
